Europäisches Patentamt

European Patent Office

Office européen des brevets

(11) Veröffentlichungsnummer: **0 282 627**
**A2**

(12) # EUROPÄISCHE PATENTANMELDUNG

(21) Anmeldenummer: **87112121.6**

(22) Anmeldetag: **21.08.87**

(51) Int. Cl.⁴: **G01N 21/91** , G01N 27/82

(30) Priorität: **16.03.87 DE 3708461**

(43) Veröffentlichungstag der Anmeldung:
**21.09.88 Patentblatt 88/38**

(84) Benannte Vertragsstaaten:
**ES FR GB IT SE**

(71) Anmelder: **Tiede GmbH + Co**
**Rissprüfanlagen**
**Bahnhofstr. 94-98 Postfach**
**D-7087 Essingen(DE)**

(72) Erfinder: **Feil, Franz, Dipl.-Ing.**
**Alter Rathausplatz 2**
**D-7080 Aalen-Ebnat(DE)**

(74) Vertreter: **Grave, Ivar Gerhard, Dipl.-Phys.**
**Aachener Strasse 321**
**D-5000 Köln 41(DE)**

(54) **Verfahren zur zerstörungsfreien Rissprüfung von Werkstücken als Prüflingen nach dem Magnetpulver-bzw. dem Farbeindringverfahren.**

(57) Hierbei werden Magnet-oder Farbeindringteilchen bzw. - Lösungen, mit oder ohne Zusatzmittel in Form von fluoreszierenden Pulvern oder wäßrigen Suspensionen auf die Prüflinge aufgebracht. Sie werden im Falle der Magnetpulverprüfung magnetisiert und durch eine Leuchte, die als anregende Lichtquelle dient, mit vorbestimmter Spektralamplitude beleuchtet. Das von einem Oberflächenbereich des Prüflings abgestrahlte Licht wird selbsttätig ausgewertet oder durch eine Sichtprüfung beurteilt. Hierbei wird die Prüfungsoberfläche selektiv mit dem Licht des Wellenlängenintervalls von 400-500 Nanometern bestrahlt (angeregt) und das abgestrahlte Licht selektiv in einem Wellenlängenintervall von 500 Nanometern bis 600 Nanometern ausgewertet bzw. beurteilt.

EP 0 282 627 A2

# Verfahren zur zerstörungsfreien Rissprüfung von Werkstücken als Prüflingen nach dem Magnetpulver- bzw. dem Farbeindringverfahren.

Die Erfindung betrifft ein Verfahren zur zerstörungsfreien Rissprüfung von Werkstücken als Prüflingen nach dem Magnetpulver-bzw. dem Farbeindringverfahren nach dem Oberbegriff des Patentanspruches 1.

Das magnetelektrische Rissprüfverfahren ist ein wichtiges zerstörungsfreies Prüfverfahren, bei dem die Prüflinge magnetisiert werden, damit die zu findenden Oberflächenfehlstellen mit Hilfe eines magnetischen Streuflusses angezeigt werden können. Ausserdem können Oberflächenfehler mit Eindring-oder Penetriermitteln, die farbig oder fluoreszierend sind oder auch mit Magnetpulvern, sichtbar gemacht werden. Solche fehlerhaften Werkstücke können vom Prüfpersonal dann aussor tiert werden. Bei dem auch Fluxen genannten Verfahren können handelsübliche Ferroflux-und Fluofluxmittel in Form von Pulvern, Pasten oder in Öl oder Wasser suspendierbaren Konzentraten verwendet werden, je nachdem, ob eine Trocken-oder Nassprüfung erfolgen soll. Die Suspendierung kann in Öl, Petroleum oder Wasser erfolgen und die Additive können Schlemmmittel, Späne, Rostschutzmittel, Farbstoffe sowie ihre Konzentrate enthalten, je nach einzelnem Arbeitszweck und Prüfling. Einzelheiten sind der deutschen DIN-Norm 54 130 entnehmbar.

Es ist bekannt, für die Anregung der Prüflingsoberfläche Ultraviolettlicht mit der Wellenlänge 365 Nanometer zu verwenden. Dies soll zu einer maximalen Anregung und guter Lichtausbeute im abgestrahlten Bereich führen. Somit beschränkt man sich anregungsseitig auf Ultraviolettlicht bzw einen Spektralbereich, bei dem die Amplitude im unsichtbaren(ultravioletten) Bereich liegen muß.

Die Anregung durch im UV-Bereich arbeitenden Leuchten ist jedoch mit einigen Nachteilen verbunden. Es müssen gewisse Verhütungsvorschriften für das prüfende Personal oder die Prüfumgebung beachtet werden. Für den UV-Bereich benötigt man ferner Spezialeuchten, die relativ teuer sind, oder man muß andererseits Leuchten verwenden, die nicht hinreichend selektiv für UV sind, ein wesentlicher Teil der Lichtausbeute also verloren geht.

Hier will die Erfindung Abhilfe schaffen. Diese und weitere Nachteile werden überraschend durch die Erkennnis vermieden, daß man beim Arbeitsschritt der Anregung der Prüflingsoberfläche, welcher ein fluoreszierendes Prüfmittel aufgetragen ist, verbesserte Arbeits-und Verfahrensbedingungen dadurch erreicht, daß man das Maximum, d.h. die Amplitude im Wellenlängenspektrum der anregenden Strahlung überhaupt in das sichtbare Licht verlegt, also nicht im ultravioletten Strahlenbereich anregt. Bei einer beachtlichen Mehrzahl von fluoreszierenden Magnetpulverfarbstoffen erhält man einmal anregungsseitig eine größere Lichtausbeute, ein schärferes Maximum bzw. genauer ausgeprägte Amplitudenspitze mit zugehörigem - scharfen Flankenabfall in Richtung der grösseren Wellenlängen, eine erhöhte Selektivität; man kann mit billigeren, sichtbares Licht abstrahlenden Leuchten im Anregungsbereich arbeiten und erreicht trotzdem auf der Bewertungs-bzw. Sichtseite, also in fluoreszierendem, langwelligerem Bereich eine größere Lichtausbeute der abgestrahlten Amplitude, ein scharfes Amplitudenspektrum und gut verifizierbare Prüfergebnisse.

Hierbei ist es vorteilhaft, die Prüflingsoberfläche selektiv mit dem Licht des Wellenlängenintervalls von 400 - 500 Nanometer zu bestrahlen. Die Prüfergebnisse kann man optimieren, indem die Prüflingsoberfläche mit einem Licht, dessen spektrale Amplitude, d.h. Maximum, zwischen $450 \pm 3\%$ und $475 \pm 3\%$ Nanometer liegt, bestrahlt. Andererseits erreicht man vorteilhaft in dem Bewertungsbzw. sichtbaren Beurteilungsbereich,in dem die abgestrahlte fluoreszierende Strahlung ausgewertet oder beobachtet wird, optimale Bedingungen dadurch, daß das abgestrahlte Licht selektiv in einem Wellenlängenbereich von 500 - 600 Nanometern,insbesondere bei 525 Nanometer $\pm 5\%$, ausgewertet bzw. burteilt wird.

Eine Ausführungsform der Erfindung ist der Tabelle 1 zu entnehmen, die ein Absorptions-Emissionsspektrum von fluoreszierendem Magnetpulverfarbstoff graphisch darstellt, mit den relativen Emissionswerten auf der Ordinate und den Wellenlängen Lamda in Nanometern auf der Abszisse. Die Tabelle stellt eines der bevorzugten Ausführungsformen des erfinderischen Verfahrens dar und ist nicht einschränkend zu bewerten, da bei zugehörigen anderen Messungen geringfügige, z.T. prozentual angegebene Abweichungen auftreten. Dies berührt aber nicht das Erfindungsprinzip.

Eine erfindungsgemäße und überraschende Erkenntnis besteht weiter darin, daß bei vielen Einzelfällen es darauf ankommt, daß beim Arbeiten im anregenden Bereich und beim Bewerten des abstrahlenden Bereiches man auf eine bestimmte Lichtwellendifferenz bzw. auf eine Differenz zwischen zwei Lichtwellen-Intervallen abstellen und diese bei Verfahren zweckmäßig und optimal einsetzen muß. Dementsprechend muß mit Licht solcher Wellenlängen gearbeitet werden, bei dem die Differenz $\Delta$ der Amplituden eines ersten Wellenlängenintervalls, zugeordnet dem anregenden Arbeitsschritt, und einem zweiten Wellenlängenintervall, zugeordnet dem Arbeitsschritt, in welchem auf der Abstrahlungsseite eine Bewertung erfolgt, etwa den Wert Δ = 200 Nanometer beträgt. Der vorbezeichnete Arbeitsschritt kann weiter dadurch optimiert werden, daß der Wert Δ = 100 Nanometer ± 3%, insbesondere 60 Nanometer ± 3%,beträgt.

Aus Vorstehendem sind die Vorteile erkennbar: Man kann für beide Arbeitsbereiche bzw. während beider Arbeitsschritte lediglich mit sichtbarem Licht bzw. im sichtbaren Bereich arbeiten, so daß die technischen Probleme hinsichtlich der Sicherheit und sonstiger Verhütungsvorschriften verringert und die Kosten für die Leuchte und den Betrieb verkleinert werden. Man erreicht einen stark optimierten Kontrast, der die Beurteilung der Risslinien der Größe und Richtung nach erleichtert und die Prüfgenauigkeit erhöht.

Die Erfindung ist nicht hierauf eingeschränkt. Zwar ist die Verwendung von Spektralfiltern für Leuchten bekannt. Nunmehr wird aber vorteilhaft vorgeschlagen, ein vorbe stimmtes Spektralfilter bei dem Arbeitsschritt der Anregung zu verwenden, derart, daß ein Spektralfilter bzw. sein Material für den vorbezeichneten Wellenlängenbereich oder die vorbestimmten Wellenamplituden, und zwar nun im sichtbaren Bereich, spezifisch ist, also insbesondere zwischen 450 - 475 Nanometer durchlässig und außerhalb dieses Wellenlängenintervalls reflektierend wirkt. Das gleiche gilt für die Auswahl des Spektralfilters auf der Abstrahlungsseite, d.h. insbesondere wird hier ein vorbestimmtes Spektralfilter eingesetzt, welches für etwa 525 Nanometer maximal durchlässig ist, außerhalb dieses Bereiches aber reflektiert. Es kann auch ein Spektralfilter eingesetzt werden, welches im Bereich 500 - 600 Nanometer durchlässig ist und außerhalb dieses Bereiches reflektiert.

Ein weiterer Vorteil wird erfindungsgemäß durch den Vorschlag erreicht, sowohl für den Arbeitsschritt der Anregung als auch für den bei der Beurteilung der Abstrahlung jeweils vorbestimmte Polarisationsfilter einzusetzen. Dies erleichter die Arbeitsweise und schafft eine besonders scharfe Trennung des gerade anzustrahlenden und auszuwertenden bzw. begrenzten Prüfbereiches auf der Prüflingsoberfläche, weil besonders effektiv die benachbarten Wellenlängenbereiche, die nicht das Polarisationsfilter auf der Anregungs-und Abstrahlungsseite durchsetzen können, absorbiert werden. Das erhöht weiter den Kontrast. Zwar ist die Benutzung von Polarisationsfiltern in anderen Bereichen der Physik bekannt, bringt aber auf dem besonderen Arbeitsgebiet der zerstörungsfreien Prüfung nach dem Magnetpulver-Rissprüfverfahren den vorbezeichneten Vorteil und ist überraschend und nicht naheliegend, weil der Einsatz von Polarisationsfiltern bei der bisherigen UV-Anregung abwegig erscheint.

Je nach Einzelfall ist es vorteilhaft anstelle von Leuchten Lichtleiter in Form von Glasfasern oder Fluidkabeln zur Beleuchtung einzusetzen. Diese können mit Dauerlicht, wie an sich bekannt, oder auch mit gechopptem (getaktetem) Dauerlicht oder Blitzlicht betrieben werden. Im Einzelfalle ist es vorteilhaft eine Video-, CCD-Flächen-, oder CCD-Zeilen-Kameras einzusetzen, statt des menschlichen Auges, ggf. aber soweit, daß das von diesen Kameras erzeugte Bild der Bewertung durch das menschliche Auge zugänglich gemacht wird, entweder zur abschließenden Beurteilung der Fehlerverteilung oder auch als vorläufiges Zwischenergebnis. Bei dem vorstehenden Verfahren kann ein optoelektronischer Empfang, unter Einsatz von Analogschwellen oder Analog-Digitalwandlern oder Rechnern erfolgen, um die Prüfergebnisse automatisch zu erfassen, zu verarbeiten und zu bewerten.

Die CCD (charged coupled devices) Schaltung wird auch als Eimerkettenschaltung bezeichnet.

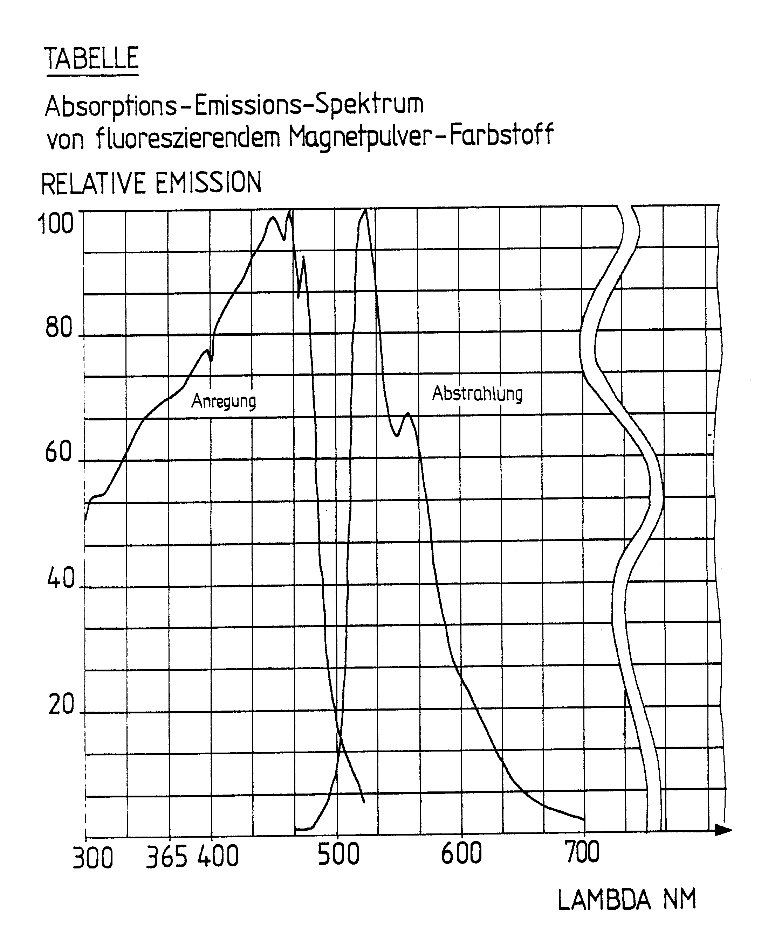

## Ansprüche

1. Verfahren zur zerstörungsfreien Rissprüfung von Werkstücken als Prüflingen nach dem Magnetpulver-bzw. Farbeindringverfahren, bei welchem Magnet-oder Farbeindringteilchen bzw.-Lösungen, mit oder ohne Zusatzmittel in Form von fluoreszierenden Pulvern oder wäßrigen Suspensionen auf die Prüflinge aufgebracht, im Falle der Magnetpulverprüfung magnetisiert und durch eine Leuchte als anregende Lichtquelle mit vorbestimmter Spektralamplitude beleuchtet und das von einem Oberflächenbereich des Prüflings abgestrahlte Licht selbsttätig ausgewertet oder durch eine Sichtprüfung beurteilt wird, dadurch gekennzeichnet, daß die Prüflingsoberfläche selektiv mit dem Licht des Wellenlängenintervalls von 400 - 500 Nanometer bestrahlt (angeregt) wird.

2. Verfahren nach Anspruch 1, dadurch gekennzeichnet, daß die Prüflingsoberfläche mit einem Licht, dessen spektrale Amplitude zwischen 450 ± 3% und 475 ± 3% liegt, bestrahlt wird.

3. Verfahren nach Anspruch 1 oder 2, dadurch gekennzeichnet, daß das abgestrahlte Licht selektiv in einem Wellenlängenintervall von 500 Nanometern bis 600 Nanometern, insbesondere bei 525 Nanometer ± 5%, ausgewertet bzw. beurteilt wird.

4. Verfahren, insbesondere nach einem der Ansprüche 1-3, dadurch gekennzeichnet, daß mit anregendem und abstrahlendem Licht solcher Wellenlängen gearbeitet wird, bei dem bzw. den die Differenz Δ der Amplitudenwellen der Wellenlängenintervalle zwischen zugehörigen Arbeitsschritt des Anregens und demjenigen des Auswertens der Abstrahlung, Δ ≦ 200 Nanometer beträgt.

5. Verfahren nach einem der vorstehenden Ansprüche, insbesondere Anspruch 4, dadurch gekennzeichnet, daß der Wert dieser Differenz Δ ≦ 100 Nanometer ± 3%, insbesondere 60 Nanometer ± 3%, beträgt.

6. Verfahren nach einem der vorstehenden Ansprüche, dadurch gekennzeichnet, daß beim Arbeitsschritt der Anregung und/oder dem Arbeitsschritt der Bewertung der Abstrahlung in den Strahlengang Spektralfilter eingesetzt werden.

7. Verfahren nach einem der Ansprüche 1-5, dadurch gekennzeichnet, daß beim anregenden Arbeitsschritt und dem die Abstrahlung bewertenden Arbeitsschritt jeweils vorbestimmte Polarisationsfilter im Strahlengang verwendet werden.

8. Verfahren nach einem der vorstehenden Ansprüche, dadurch gekennzeichnet, daß Lichtleiter in Form von Glasfaser-oder Fluidkabeln als Leuchten eingesetzt werden.

9. Verfahren nach Anspruch 8, dadurch gekennzeichnet, daß mit gechopptem (getaktetem) Dauerlicht oder mit Blitzlicht gearbeitet wird.

10. Verfahren nach einem der vorstehenden Ansprüche, dadurch gekennzeichnet, daß die Aufnahme des abgestrahlten Lichtes durch Video-, CCD-Flächen oder CCD-Zeilen-Kameras aufgenommen und /oder diese Aufnahmen durch das menschliche Auge bewertet werden.

## TABELLE

Absorptions-Emissions-Spektrum
von fluoreszierendem Magnetpulver-Farbstoff

RELATIVE EMISSION

LAMBDA NM